# EUROPÄISCHE PATENTANMELDUNG

(11) **EP 2 716 493 A2**
(43) Veröffentlichungstag der Anmeldung: **09.04.2014**
(21) Anmeldenummer: 13187582.5
(22) Anmeldetag: 07.10.2013
(51) Int. Cl.: B60N 2/14

(54) **Sitz für eine Krankabine oder dergleichen**

(30) Priorität: 07.10.2012 DE 102012109508
(71) Anmelder: Karl Miller GmbH, 77933 Lahr (DE)
(72) Erfinder: Keller, Manfred, 87767 Niederrieden (DE); Feyerabend, Andy, 77933 Lahr (DE)
(74) Vertreter: Hutzelmann, Gerhard

(57) **Zusammenfassung**

Sitz (2) für eine Krankabine (1) oder dergleichen, wobei der Sitz (2) dreh- bzw. schwenkbar angeordnet ist.

## Beschreibung

Die Erfindung betrifft einen Sitz für eine Krankabine oder dergleichen.

In Krankabinen steht für den Sitz nur ein sehr begrenzter Raum zur Verfügung. Trotzdem muss der Sitz aber bequem sein, da er für lange Arbeitszeiten dient.

Der Erfindung liegt die Aufgabe zugrunde einen Sitz so auszugestalten, dass er auch bei längeren Arbeitszeiten hinreichend bequem ist, wozu auch eine entsprechende Größe notwendig ist.

Andererseits muss der Kranführer auch ohne große Verrenkungen auf den Sitz gelangen.

Diese Aufgabe wird erfindungsgemäß dadurch gelöst, dass der Sitz dreh- bzw. schwenkbar angeordnet ist.

Dadurch ist es möglich, den Sitz soweit an eine Aussenwand der Kabine zu verschieben, dass der Kranführer ohne große Anstrengungen auf den Sitz gelangen kann.

Eine vorteilhafte Ausgestaltung der Erfindung ist dadurch gekennzeichnet, dass eine Kulissenführung für die Schenkbewegung vorgesehen ist.

Damit ist die Bewegung des Sitzes beim Verstellen vorgegeben.

Weiterhin ist es vorteilhaft, wenn gemäß einer weiteren Ausgestaltung der Erfindung der Sitz an einem Hebelarm gelagert ist.

Damit ist auch gleichzeitig eine Drehbewegung vorgegeben und der Sitz kann optimal verstellt werden.

Gemäß einer besonderen Ausgestaltung der Erfindung ist der Hebelarm als Doppelgelenk ausgebildet ist.

Damit wird der Sitz mit Hilfe des Hebelarmes und der Kulisse genau an die Stelle platziert, die für die optimale Raumausnutzung günstig ist.

Als besonders günstig hat es sich dabei ergeben, wenn das eine freie Ende des Doppelgelenks ortsfest gelagert ist.

Das zweite freie Ende des Doppelgelenks trägt dann gemäß einer weiteren vorteilhaften Ausgestaltung den Sitz.

Als sehr vorteilhaft hat es sich auch erwiesen, wenn erfindungsgemäß das mittlere Gelenk des Doppelgelenks frei beweglich angeordnet ist.

Eine weitere sehr vorteilhafte Ausgestaltung der Erfindung liegt darin, dass das den Sitz tragende freie Ende des Doppelgelenks in der Kulisse geführt ist.

Damit liegt eine Zwangsführung des Sitzes vor, der nicht frei beweglich ist.

Gemäß einer vorteilhaften Ausgestaltung der Erfindung ist die Kulisse zweiarmig ausgebildet.

Damit ist gewährleistet, dass die Sitzführung sehr stabil ist.

Sehr vorteilhaft ist es gemäß der Erfindung auch, wenn zwischen dem den Sitz tragenden Ende des Doppelgelenks und der Kulisse ein im wesentlichen U-förmiger Bügel vorgesehen ist, an dem Führungsbolzen vorgesehen sind, welche in die beiden Arme der Kulisse einzugreifen vermögen.

Eine exakte Führung des Sitzes in der Kulisse ist damit erreicht.

Gemäß einer sehr vorteilhaften Weiterbildung der Erfindung ist vorgesehen, dass an den Führungsbolzen Dämpfungsglieder angreifen.

Damit wird eine kontrollierte Bewegung des Sitzes gewährleistet.

Bevorzugt sind diese Dämpfungsglieder als Gasdruckdämpfer ausgebildet.

Als sehr vorteilhaft hat es sich auch erwiesen, wenn gemäß einer weiteren Ausgestaltung der Erfindung die Sitzfläche hochklappbar ausgebildet ist.

Damit wird die Bewegungsfreiheit des Kranführers noch weiter verbessert.

Ebenfalls sehr günstig ist es, wenn erfindungsgemäß der Sitz mit Armlehnen versehen ist, von denen wenigstens eine hochklappbar ausgebildet ist.

Armlehnen erhöhen nicht nur den Sitzkomfort sondern können auch Bedieneinrichtungen aufnehmen; wenn sie zudem noch hochklappbar ausgebildet sind, behindern sie das Ein- und Aussteigen in keiner Weise.

Eine weitere vorteilhafte Ausgestaltung der Erfindung ist dadurch gekennzeichnet, dass eine Arretiereinrichtung vorgesehen ist, welche den Sitz vorzugsweise in einer Einstiegsposition festlegt.

Damit kann sich der Sitz währen des Ein- bzw. Ausstiegs nicht unbeabsichtigt bewegen.

In der Zeichnung ist die Erfindung anhand eines Ausführungsbeispiels veranschaulicht. Dabei zeigen:
- Fig.1: eine schaubildliche Darstellung einer Krankabine mit einem vor die eine Seitenwand geschwenkten Sitz, mit hochgeklappter rechter Armlehne,

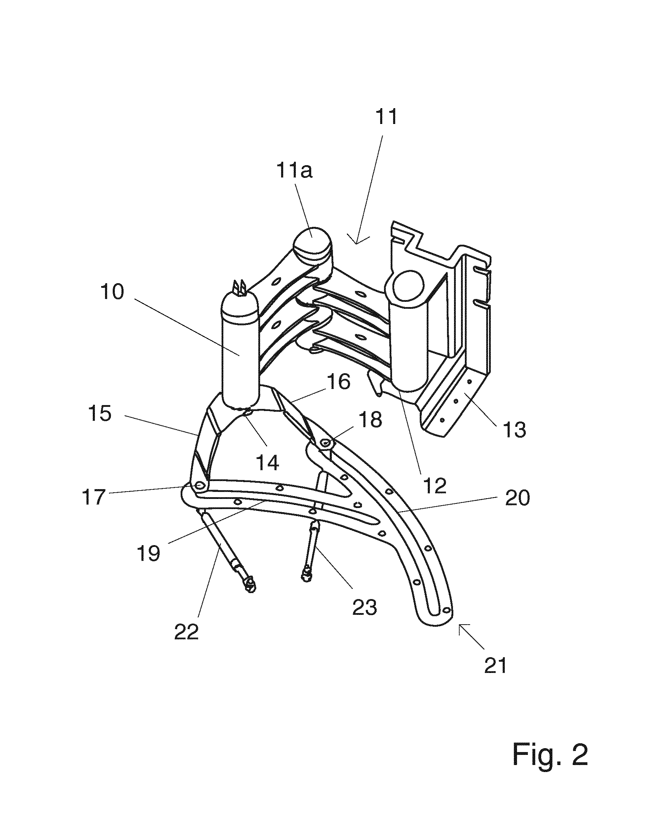

- Fig.2: eine ebenfalls schaubildliche Darstellung eines Doppelgelenkes und einer Kulissenführung und

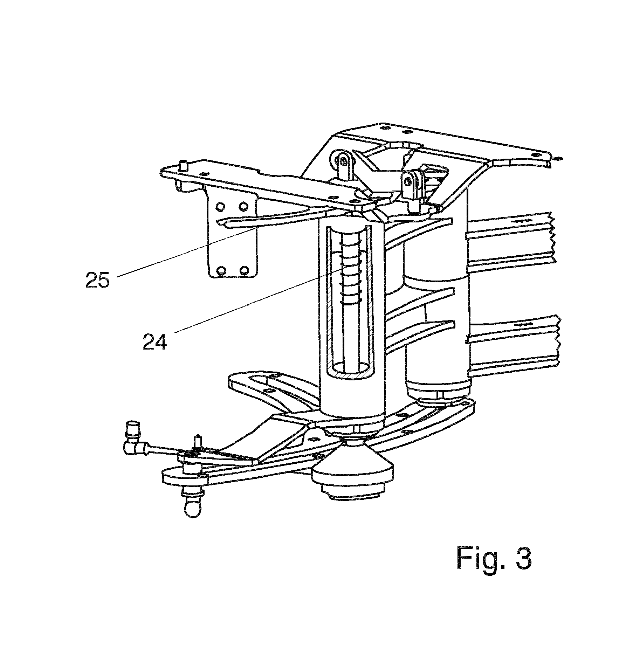

- Fig.3: eine weitere Darstellung des Doppelgelenkes mit einer Arretiereinrichtung

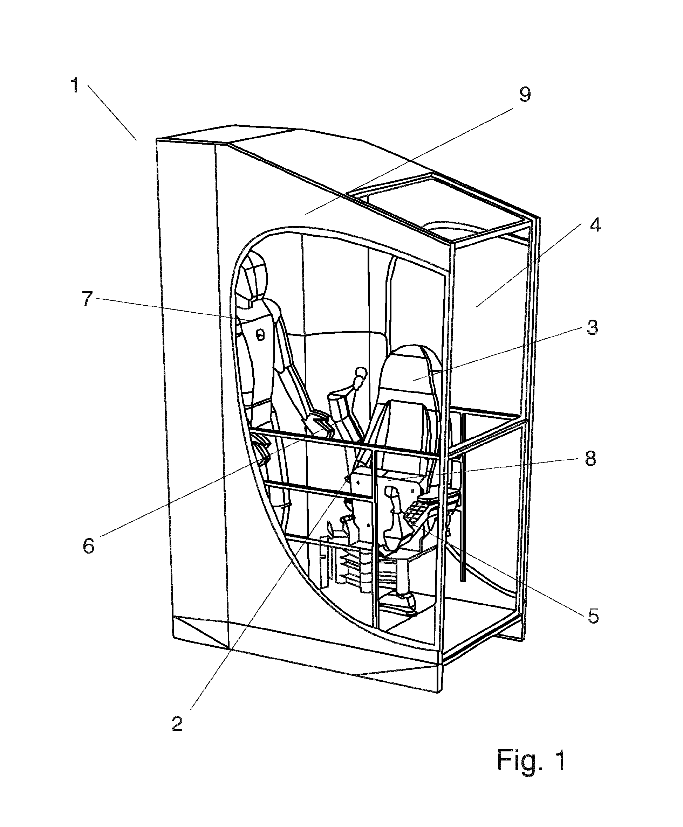

Mit 1 ist in Fig.1 eine Krankabine bezeichnet, die an ihrer Vorderseite vollständig verglast ist und auch in ihren Seitenwänden verhältnismäßig großflächige Verglasungen aufweist.

Im Inneren der Kabine 1 ist ein Sitz 2 vorgesehen, der zum Erleichtern des Ein- und Ausstiegs mit seinem Rückenteil 3 an eine Seitenwand 4 geschwenkt ist. Der Sitz ist mit zwei Armlehnen 5 und 6 ausgestattet, die nicht näher dargestellte Bedienteile tragen.

Die rechte Armlehne 6 ist in Fig.1 genauso wie die Sitzfläche 8 hochgeklappt, so dass für den Kranführer 7 ein freier Zugang zum Sitz 2 gegeben ist.

Nachdem der Kranführer 7 die Position zwischen dem Sitz 2 und der zweiten Seitenwand 9 eingenommen hat, kann er die Sitzfläche 8 und die Armlehne 6 herunterklappen und anschließend den Sitz 2 um 90° entgegen dem Uhrzeigersinn in die Arbeitsstellung schwenken.

Der Sitz 2 ist zentral am einen freien Ende 10 eines Doppelgelenkes 11 befestigt. Das andere freie Ende 12 dieses Doppelgelenkes 11 ist über ein Befestigungsteil 13 an der Kabine 1 festgelegt, während das mittlere Gelenk 11a des Doppelgelenks 11 frei beweglich ist.

Am freien Ende 10 ist darüber hinaus ein im wesentlichen U-förmiger Bügel 14 angeordnet, dessen beide freie Schenkel 15 und 16 Führungsbolzen 17 und 18 tragen, die ihrerseits jeweils in einen Arm 19,20 einer Kulisse 21 eingreifen.

An diesen Führungsbolzen 17 und 18 greift darüber hinaus jeweils ein Gasdruckdämpfer 22 bzw. 23 an.
Damit läuft die Schwenkbewegung gedämpft ab und der Sitz 2 schießt nicht von einer Endstellung in die andere.

Im Doppelgelenk 11 ist ein nicht sichtbarer Bolzen 24 angeordnet, der über einen Hebel 25 an der Unterseite des Sitzes 2 betätigbar ist und der in der Einstieg-Position des Sitzes 2 diesen verriegelt.

Zum Schwenken des Sitzes in die Betriebsstellung wird dieser Hebel 25 betätigt, wodurch der Bolzen freigegeben wird.

## Patentansprüche

1. Sitz (2) für eine Krankabine (1) oder dergleichen, **dadurch gekennzeichnet, dass** der Sitz (2) dreh- bzw. schwenkbar angeordnet ist.

2. Sitz nach Anspruch 1, **dadurch gekennzeichnet, dass** eine Kulissenführung (21) für die Schwenkbewegung vorgesehen ist.

3. Sitz nach Anspruch 1 oder 2, **dadurch gekennzeichnet, dass** der Sitz (2) an einem Hebelarm (11) gelagert ist.

4. Sitz nach Anspruch 3, **dadurch gekennzeichnet, dass** der Hebelarm als Doppelgelenk (11) ausgebildet ist..

5. Sitz nach Anspruch 4, **dadurch gekennzeichnet, dass** das eine freie Ende (12) des Doppelgelenks (11) ortsfest gelagert ist.

6. Sitz nach Anspruch 4 oder 5, **dadurch gekennzeichnet, dass** das zweite freie Ende (10) des Doppelgelenks (11) den Sitz (2) trägt.

7. Sitz nach Anspruch 4, 5 oder 6, **dadurch gekennzeichnet, dass** das mittlere Gelenk (11a) des Doppelgelenks (11) frei beweglich angeordnet ist.

8. Sitz nach einem der Ansprüche 4 bis 7, **dadurch gekennzeichnet, dass** das den Sitz (2) tragende freie Ende (10) des Doppelgelenks (11) in der Kulisse (21) geführt ist.

9. Sitz nach Anspruch 8, **dadurch gekennzeichnet, dass** die Kulisse (21) zweiarmig ausgebildet ist.

10. Sitz nach Anspruch 9, **dadurch gekennzeichnet, dass** zwischen dem den Sitz (2) tragenden Ende (10) des Doppelgelenks (11) und der Kulisse (21) ein im wesentlichen U-förmiger Bügel (14) vorgesehen ist, an dem Führungsbolzen (17, 18) vorgesehen sind, welche in die beiden Arme (19, 20) der Kulisse (21) einzugreifen vermögen.

11. Sitz nach Anspruch 10, **dadurch gekennzeichnet, dass** an den Führungsbolzen (17, 18) Dämpfungsglieder (22, 23) angreifen.

12. Sitz nach Anspruch 11, **dadurch gekennzeichnet, dass** die Dämpfungsglieder (22, 23) als Gasdruckdämpfer ausgebildet sind.

13. Sitz nach einem der vorhergehenden Ansprüche, **dadurch gekennzeichnet, dass** die Sitzfläche (8) hochklappbar ausgebildet ist.

14. Sitz nach einem der vorhergehenden Ansprüche, **dadurch gekennzeichnet, dass** der Sitz (2) mit Armlehnen (5, 6) versehen ist, von denen wenigstens eine hochklappbar ausgebildet ist.

15. Sitz nach einem der vorhergehenden Ansprüche, **dadurch gekennzeichnet, dass** eine Arretiereinrichtung vorgesehen ist, welche den Sitz (2) vorzugsweise in einer Einstiegsposition festlegt.
